# FASCICULE DE BREVET EUROPEEN

(11) **EP 1 713 662 B1**
(45) Date de publication et mention de la délivrance du brevet: **17.11.2010**
(21) Numéro de dépôt: 05790721.4
(22) Date de dépôt: 12.07.2005
(51) Int. Cl.: B60R 19/24

(54) **BOUCLIER DE PARE-CHOCS DE VEHICULE AUTOMOBILE**
STOSSSTANGENABDECKUNG FÜR KRAFTFAHRZEUG
BUMPER FACE-BAR FOR MOTOR VEHICLE

(30) Priorité: 19.07.2004 FR 0407983
(43) Date de publication de la demande: 25.10.2006
(73) Titulaire: Compagnie Plastic Omnium, 69007 Lyon (FR)
(72) Inventeur: FAYT, Arnold, F-01640 Jujurieux (FR); CHERON, Hugues, F-01800 Meximieux (FR)
(74) Mandataire: Remy, Vincent Noel Paul
(86) Numéro de dépôt international: PCT/FR2005/001801
(87) Numéro de publication internationale: WO 2006/018494

(56) Documents cités:
- EP-A- 1 352 811
- US-A1- 2002 073 529
- US-B1- 6 357 821

## Description

La présente invention concerne un bouclier de pare-chocs de véhicule automobile, constitué par une peau et une doublure de peau et un procédé de montage d'un tel bouclier sur un véhicule automobile.

Du document EP 1 352 811, on connaît un ensemble de carrosserie avant d'un véhicule automobile constitué par des blocs optiques, un bouclier et une armature portant les blocs optiques, ces éléments constitutifs de l'ensemble de carrosserie pouvant être réunis en dehors de la chaîne de montage du véhicule et l'ensemble étant rapporté d'un seul tenant à l'avant du véhicule, pour être mis en référence par rapport aux ailes avant, puis assujetti au châssis du véhicule par des fixations de montage.

Un tel ensemble présente l'avantage de garantir une parfaite mise en référence du bouclier par rapport aux optiques, puis du bouclier et des blocs optiques par rapport aux ailes.

En revanche, il présente l'inconvénient de rendre difficiles d'accès les fixations assurant le montage de l'ensemble sur le châssis, ces fixations pouvant comprendre des supports pour les blocs optiques et des fixations de montage du bouclier sur le châssis.

La présente invention vise à proposer une solution visant à conserver l'avantage d'une parfaite mise en référence entre le bouclier, les blocs optiques et les ailes, tout en facilitant la fixation de ces pièces sur le châssis du véhicule ainsi que, le cas échéant, la fixation de supports pour les blocs optiques sur le châssis du véhicule.

De façon plus générale, l'invention vise à faciliter le montage d'un bouclier et sa mise en référence par rapport à toute pièce visible adjacente audit bouclier.

A cet effet, la présente invention a pour objet un bouclier de pare-chocs de véhicule automobile, devant être mis en référence avec des blocs optiques et des pièces visibles adjacentes audit bouclier et destiné à être monté sur le châssis du véhicule automobile par des fixations de montage, ce bouclier étant **caractérisé en ce qu**'il est constitué par une peau externe, une doublure de peau interne et des moyens de fixation de la peau sur la doublure de peau, et en ce que :
- la peau comporte des points de référence par rapport aux blocs optiques et aux pièces visibles adjacentes,
- la doublure comporte des points de positionnement par rapport aux blocs optiques et/ou aux pièces visibles adjacentes,
- la doublure comporte des supports pour porter seule les blocs optiques convenablement positionnés par rapport aux points de positionnement,
- la doublure est conformée dé manière à permettre l'accès aux fixations de montage sur le châssis du véhicule lorsque la doublure portant les optiques est présentée devant le châssis du véhicule,
- les moyens de fixation de la peau sur la doublure de peau sont agencés pour assurer la superposition des points de référence sur la peau et des points de positionnement de la doublure de peau.

Le bouclier de pare-chocs selon l'invention présente l'avantage de se dédoubler en une peau externe et une doublure de peau interne et de pouvoir, de ce fait, être monté sur le véhicule automobile en deux temps.

Dans un premier temps, la doublure de peau constitue, avec les blocs optiques, un ensemble d'un seul tenant qui est rapporté sur le véhicule comme l'ensemble de carrosserie d'un seul tenant de l'état de la technique, ce qui assure une parfaite mise en référence de la doublure de peau avec les blocs optiques, puis de la doublure de peau et des blocs optiques avec les pièces visibles adjacentes, par exemple les ailes.

L'ensemble, présenté devant le véhicule, peut aisément être fixé sur le châssis du véhicule grâce au fait que les fixations de montage sur le châssis demeurent accessibles à travers la doublure de peau. De même, d'éventuels supports pour les blocs optiques, prévus entre le châssis et les blocs optiques, peuvent être aisément assujettis aux blocs optiques et au châssis.

Dans un second temps, la peau externe est rapportée sur la doublure de peau et les moyens de fixation de la peau sur la doublure assurent le bon positionnement de la peau, par superposition des points de référence de la peau et des points de positionnement de la doublure de peau qui ont été préalablement mis en référence par rapport aux blocs optiques et aux pièces visibles adjacentes.

Le résultat obtenu est une parfaite mise en référence de la peau externe par rapport aux blocs optiques et aux pièces visibles adjacentes, l'ensemble de carrosserie ayant pu être facilement monté sur le véhicule automobile, sans difficulté d'accès aux fixations de montage.

La présente invention offre l'avantage supplémentaire que, le bouclier étant dédoublé entre une peau externe et une doublure de peau interne, la peau et la doublure peuvent chacune présenter une épaisseur moindre que le bouclier correspondant, ce qui leur confère une plus grande souplesse et, par conséquent, une meilleure adaptabilité géométrique, au moment de leur montage sur le véhicule automobile.

De plus, la doublure de peau peut remplir d'autres fonctions telles que servir de support d'organes, comme par exemple des anti-brouillard ou des radars, ou de renfort anti-cloquage, améliorant la résistance de la peau externe à une pression légère appliquée par un utilisateur.

Dans un mode de réalisation particulier de l'invention, la peau est ajourée de manière à permettre sa fixation sur la doublure de peau et/ou sur d'autres pièces de carrosserie environnantes. Dans ce cas, des obturateurs sous forme de bandeaux de protection viennent recouvrir les ajours de la peau, après fixation de celle-ci.

La présente invention a également pour objet un procédé de montage d'un bouclier tel que décrit ci-dessus sur un châssis de véhicule automobile, comprenant les étapes suivantes :
- positionnement et fixation des blocs optiques sur la doublure de peau,
- présentation de la doublure de peau portant les blocs optiques devant le véhicule,
- positionnement relatif de la doublure de peau et des blocs optiques par rapport aux pièces visibles adjacentes,
- fixation de la doublure sur le châssis et éventuellement de supports pour les blocs optiques entre le châssis et les blocs optiques,
- présentation et fixation de la peau sur la doublure de peau, les points de référence de la peau étant superposés aux points de positionnement de la doublure de peau.

Dans un autre mode de mise en oeuvre, on commence par présenter la doublure de peau seule devant le véhicule, on la positionne par rapport aux pièces visibles adjacentes, puis on fixe les blocs optiques sur la doublure de peau.

La présente invention sera mieux comprise à la lecture de la description qui va suivre d'un mode de réalisation donné à titre d'exemple non limitatif de la portée de l'invention, en référence aux dessins annexés dans lesquels :
- la figure 1 est une vue en perspective éclatée d'un bouclier constitué par une peau et une doublure de peau selon un mode de réalisation de l'invention,
- la figure 2 est une vue en perspective d'une partie de la doublure de peau portant un bloc optique,
- la figure 3 est une vue en perspective de l'avant d'un véhicule automobile,
- la figure 4 est une vue analogue à la figure 3 après que la doublure portant les blocs optiques a été rapportée sur le véhicule,
- la figure 5 est une vue analogue à la figure 4 après que la peau a été rapportée sur la doublure.

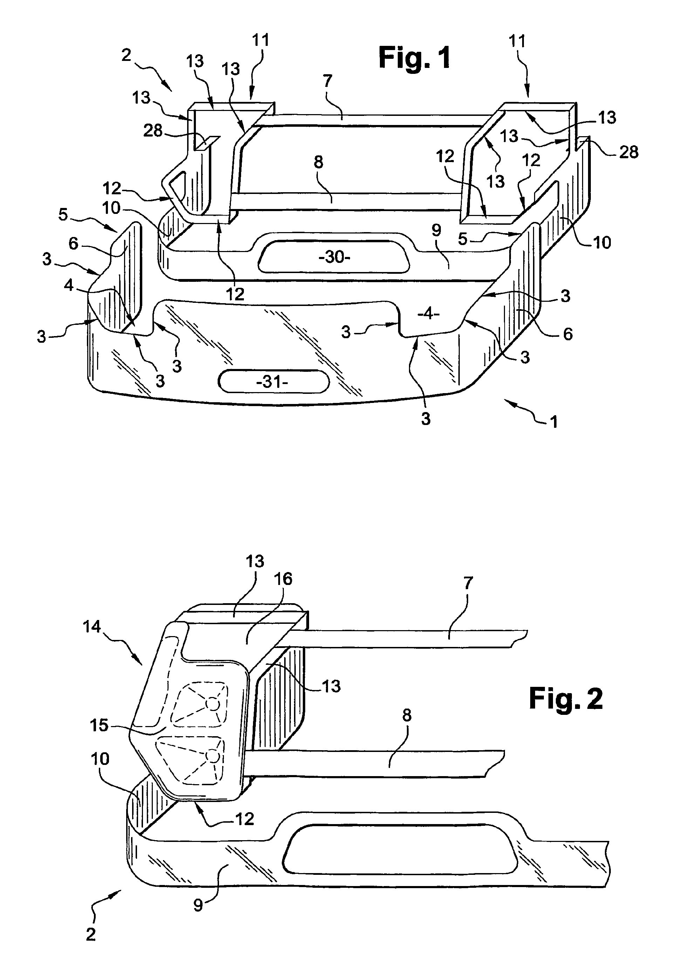

La figure 1 représente un bouclier de pare-chocs constitué par une peau externe 1 et par une doublure interne 2, toutes deux réalisées en polypropylène.

La peau externe est recouverte d'une peinture d'aspect, tandis que la doublure, qui n'est pas destinée à être vue depuis l'extérieur du véhicule, n'est pas peinte.

La peau comporte des points de référence par rapport aux blocs optiques et par rapport aux ailes.

Par rapport aux blocs optiques, les points de référence sont constitués par les rebords 3 de deux échancrures 4 situées dans la partie supérieure des coins de la peau.

Par rapport aux ailes, les points de référence sont constitués par les rebords supérieurs arrière 5 des crosses 6 de la peau.

Par définition, les points de référence, qui sont ici des bords de référence 3, 5, sont des parties de la peau qui doivent être parfaitement mises en référence par rapport aux pièces qui leur sont adjacentes, à savoir d'une part, les blocs optiques, d'autre part, les ailes.

La doublure 2 est conformée pour épouser la forme intérieure de la peau.

Elle comporte une face avant 9, dont la partie centrale comprend une ouverture 30 qui coïncide avec une ouverture 31 prévue dans la peau 6. La face avant 9 se prolonge à chacune de ses extrémités par des faces latérales 10 qui sont destinées à s'appliquer contre les crosses 6 de la peau.

L'extrémité arrière supérieure de chaque face latérale 10 de la doublure comporte un rebord 28 qui constitue un point de positionnement de la doublure 2 par rapport à une aile.

La doublure comporte en outre des supports 11 pour porter seule des blocs optiques (non représentés sur la figure 1).

Chaque support 11 est constitué par une structure dont les bords inférieurs 12 constituent des points de positionnement de la doublure 2 par rapport aux blocs optiques.

Chaque structure constituant un support de bloc optique est donc dimensionnée de manière à porter le bloc optique et à le maintenir avec son vitrage 15 convenablement positionné par rapport aux bords de référence 12.

La doublure comporte enfin deux traverses 7 et 8, situées en retrait de sa face avant 9, reliant les deux structures 11.

On voit, sur la figure 2, un bloc optique 14 dont le vitrage 15 est convenablement positionné par rapport aux bords de référence 12. La doublure porte seule les deux blocs optiques pendant son montage sur le véhicule.

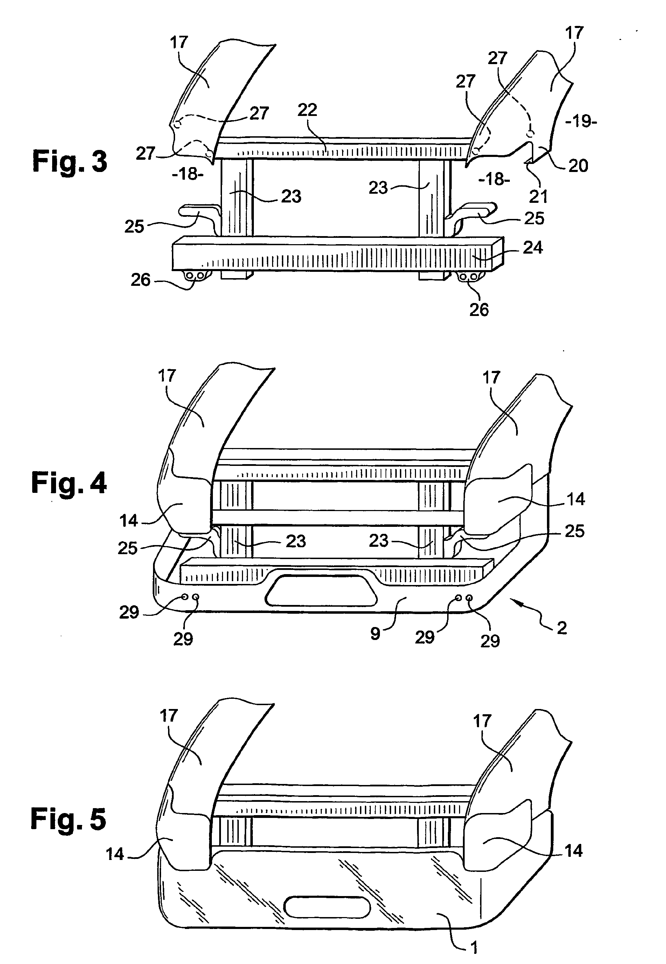

Sur la figure 3, on a représenté l'avant d'un véhicule automobile comportant deux ailes avant 17 dont chacune comporte, dans son coin avant, une échancrure 18 pour loger un bloc optique et, entre l'échancrure 18 et un passage de roue 19, un talon 20 destiné à se raccorder, par son rebord intérieur 21, avec le bord supérieur arrière 5 des crosses 6 de la peau de pare-chocs.

L'avant du véhicule comporte également une traverse supérieure 22 et des jambages verticaux 23 portés par les longerons (non représentés) du véhicule, ainsi qu'une traverse de chocs 24 également fixée sur les longerons. Les pièces 22, 23 et 24 sont considérées comme appartenant au châssis du véhicule.

Chaque jambage 23 peut en outre recevoir une équerre 25 de soutien de chaque bloc optique 14, qui a été représentée sur la figure 3 mais ne devrait être mise en place qu'après fixation de la doublure, à moins d'être repositionnable sur le jambage.

Enfin, la traverse de chocs 24 porte des pattes 26 pour la fixation de la doublure du bouclier.

Sur la figure 4, on voit l'avant du véhicule après que la doublure 2 portant les blocs optiques 14 a été rapportée sur le véhicule.

Au moment de la mise en place de la doublure 2 sur le véhicule, les structures 11 viennent se positionner par rapport aux ailes 17 par appui direct de points de référence de l'aile 17 sur les structures. A cet effet, des pions de positionnement sont prévus sur la face intérieure de l'aile, aux emplacements 27 marqués en traits interrompus sur la figure 3. Ces pions pénètrent dans des encoches ou des orifices (non représentés) ménagés dans les structures et assurent le positionnement relatif de la doublure par rapport aux ailes.

La face avant 9 de la doublure se fixe par ailleurs sur les pattes de fixation 26, grâce à des rivets 29.

Il est à noter que, lors de sa mise en place sur le véhicule, la doublure 2 peut se déformer légèrement pour s'adapter à la configuration géométrique spécifique du véhicule, et notamment à l'écartement de ses ailes 17. De même, les ailes 17 peuvent se déformer légèrement de manière à faciliter le bon positionnement de la doublure 2.

Sur la figure 4, on voit qu'après avoir été rapportée, la doublure laisse un libre accès aux points de positionnement 12 et 28 ainsi qu'aux rivets 29 de la face avant 9 sur la traverse de chocs 24, ce qui facilite la fixation de la doublure 2 sur le véhicule.

De plus, la doublure laisse également libre l'accès aux jambages 23, ce qui permet la mise en place ou le repositionnement des équerres 25 pour supporter les blocs optiques 14.

Une fois la doublure 2 en place et les équerres de soutien 25 fixées, il ne reste plus qu'à rapporter la peau 1 sur la doublure 2, comme représenté sur la figure 5.

La peau 1, qui est déformable, s'adapte alors à la configuration géométrique prise par la doublure 2 lors de sa mise en place sur le véhicule. Les bords de référence 3 de la peau 1 viennent s'appliquer contre les bords de positionnement 12 de la doublure 2. De même, les bords de référence 5 viennent se superposer aux bords de positionnement 28 de la doublure 2, ce qui assure une parfaite mise en référence entre la peau 1 d'une part, et les blocs optiques et les ailes 17 d'autre part.

On voit que, grâce à l'invention, le positionnement et la fixation de la doublure, tant sur les ailes que sur le châssis du véhicule, ainsi que la mise en place des équerres de soutien des blocs optiques, sont facilités par l'absence de la peau et que l'ajout ultérieur de la peau bénéficie d'un positionnement parfait, grâce à la présence, sur la peau et sur sa doublure, des points de référence et de positionnement.

Il est bien entendu que le mode de réalisation qui vient d'être décrit ne présente aucun caractère limitatif et qu'il pourra recevoir toute modification désirable sans sortir pour cela du cadre de l'invention definé par les revendications suivantes.

En particulier, bien qu'on n'ait décrit que la mise en référence par rapport aux ailes, l'invention s'applique à la mise en référence du bouclier par rapport à toutes pièces visibles adjacentes au bouclier, notamment le capot ou la calandre du véhicule.

## Revendications

1. Bouclier de pare-chocs de véhicule automobile, devant être mis en référence avec des blocs optiques (14) et des pièces visibles (17) adjacentes audit bouclier et destiné à être monté sur le châssis (22, 23, 24) du véhicule automobile par des fixations de montage (29), ce bouclier étant **caractérisé en ce qu'**il est constitué par une peau externe (1), une doublure de peau interne (2) et des moyens de fixation de la peau sur la doublure de peau, et **en ce que** :
- la peau comporte des points de référence (3, 5) par rapport aux blocs optiques (14) et aux pièces visibles adjacentes (17),
- la doublure comporte des points de positionnement (12, 28) par rapport aux blocs optiques (14) et/ou aux pièces visibles adjacentes (17),
- la doublure comporte des supports (11) pour porter seule les blocs optiques (14) convenablement positionnés par rapport aux points de positionnement (12),
- la doublure est conformée de manière à permettre l'accès aux fixations de montage (29) sur le châssis du véhicule lorsque la doublure portant les optiques est présentée devant le châssis du véhicule,
- les moyens de fixation de la peau sur la doublure de peau sont agencés pour assurer la superposition des points de référence (3, 5) sur la peau et des points de positionnement (12, 28) de la doublure de peau.

2. Bouclier selon la revendication 1, dans lequel la doublure (2) sert de support d'organes, comme par exemple des anti-brouillard ou des radars, ou de renfort anti-cloquage, améliorant la résistance de la peau externe à une pression légère appliquée par un utilisateur.

3. Bouclier selon la revendication 1 ou 2, dans lequel la peau est ajourée de manière à permettre sa fixation sur la doublure de peau et/ou sur d'autres pièces de carrosserie environnantes.

4. Procédé de montage d'un bouclier selon l'une quelconque des revendications 1 à 3, sur un-châssis de véhicule automobile, comprenant les étapes suivantes :
- positionnement et fixation des blocs optiques (14) sur la doublure de peau (2),
- présentation de la doublure de peau (2) portant les blocs optiques devant le véhicule,
- positionnement relatif de la doublure de peau et des blocs optiques par rapport aux pièces visibles adjacentes (17),
- fixation de la doublure sur le châssis et éventuellement de supports (25) pour les blocs optiques entre le châssis et les blocs optiques,
- présentation et fixation de la peau (1) sur la doublure de peau, les points de référence (3, 5) de la peau étant superposés aux points de positionnement (12, 28) de la doublure de peau.

5. Procédé de montage d'un bouclier selon l'une quelconque des revendications 1 à 3, sur un châssis de véhicule automobile, comprenant les étapes suivantes :
- présentation de la doublure de peau devant le véhicule,
- positionnement relatif de la doublure de peau par rapport aux pièces visibles adjacentes,
- fixation de la doublure de peau sur le châssis,
- positionnement et fixation des blocs optiques sur la doublure de peau,
- fixation éventuelle de supports pour les blocs optiques entre le châssis et les blocs optiques,
- présentation et fixation de la peau sur la doublure de peau, les points de référence de la peau étant superposés aux points de positionnement de la doublure de peau.

## Claims

1. A motor vehicle bumper shield for putting accurately into position relative to light units (14) and adjacent visible parts (17) to said shield, and designed to be mounted on the structure (22, 23, 24) of a motor vehicle by mounting fasteners (29), wherein the shield is constituted by an outer skin (1), an inner skin lining (2), and means for fastening the skin on the skin lining, and wherein:
· the skin includes reference points (3, 5) relative to the light units (14) and to the adjacent visible parts (17);
· the lining includes positioning points (12, 28) relative to the light units (14) and/or to the adjacent visible parts (17);
· the lining includes supports (11) to support alone the light units (14) appropriately positioned relative to the positioning points (12) ;
· the lining is shaped in such a manner as to allow access to the mounting (29) fasteners on the vehicle structure when the lining carrying the light units (14) is presented in front of the vehicle structure; and
· the means for fastening the skin on the skin lining are arranged to insure that the reference points (3, 5) on the skin are superposed with the positioning points (12, 28) of the skin lining.

2. A shield according to claim 1, in which the lining (2) serves as a support for members, e.g. fog lights or radars, or as reinforcements against indentation, improving the ability of the outer skin to withstand light pressure applied by a user.

3. A shield according to claim 1 or 2, in which the skin is perforated so as to allow it to be fastened on the skin lining and/or on other bodywork parts in the vicinity.

4. A method of mounting a shield according to anyone of claims 1 to 3 onto a motor vehicle structure, the method comprising the following steps:
· positioning and fastening light units (14) on the skin lining (2) ;
· presenting the skin lining (2) carrying the light units in front of the vehicle;
· positioning the skin lining and the light units relative to the adjacent visible parts (17);
· fastening the lining on the structure and optionally fastening supports (25) for the light units between the structure and the light units ; and
· presenting and fastening the skin (1) on the skin lining, the reference points (3, 5) of the skin being superposed with the positioning points (12, 28) of the skin lining.

5. A method of mounting a shield according to anyone of claims 1 to 3 on a motor vehicle structure, the method comprising the following steps:
· presenting the skin lining in front of the vehicle;
· positioning the skin lining relative to the adjacent visible parts ;
· fastening the skin lining on the structure;
· positioning and fastening light units on the skin lining;
· optionally fastening supports for the light units between the structure and the light units ; and
· presenting and fastening the skin on the skin lining, the reference points of the skin being superposed with the positioning points of the skin lining.

## Patentansprüche

1. Verkleidung des vorderen Stoßfängers eines Kraftfahrzeugs, die in Bezug zu Beleuchtungsanordnungen (14) und zu sichtbaren Teilen (17) gesetzt wird, die sich neben der Verkleidung befinden und zum Befestigen am Chassis (22, 23, 24) des Kraftfahrzeugs durch Befestigungs/Montage-Elemente (29) vorgesehen sind, wobei diese Verkleidung **dadurch gekennzeichnet ist, dass** sie aus einem äußeren Verkleidungsteil (1), einem inneren Verkleidungsteil (2) sowie Mitteln zum Befestigen des äußeren Verkleidungsteils am inneren Verkleidungsteil besteht und **dadurch gekennzeichnet ist, dass**:
- das äußere Verkleidungsteil Referenzpunkte (3, 5) in Bezug auf die Beleuchtungsanordnungen (14) und der benachbarten sichtbaren Teile (17) aufweist,
- das innere Verkleidungsteil Positionierungspunkte (12, 28) in Bezug auf die Beleuchtungsanordnungen (14) und/oder die sichtbaren Teile (17) aufweist,
- das innere Verkleidungsteil Halterungen (11) zur Aufnahme der Beleuchtungsanordnungen (14) aufweist, welche bezüglich der Positionierungspunkte zweckentsprechend angeordnet sind,
- das innere Verkleidungsteil so gestaltet ist, dass ein Zugang zu den Befestigungs/Montage-Elementen (29) am Chassis des Fahrzeugs möglich ist, wenn das die Beleuchtungsanordnung tragende innere Verkleidungsteil vor das Chassis des Fahrzeugs geführt wird,
- die Mittel zum Befestigen des äußeren Verkleidungsteils am inneren Verkleidungsteil so angeordnet sind, dass sie das Ausrichten der Referenzpunkte (3, 5) des äußeren Verkleidungsteils auf die Positionierungspunkte (12, 28) des inneren Verkleidungsteils sicherstellen.

2. Verkleidung nach Anspruch 1, bei der das innere Verkleidungsteil (2) als Halteanordnung dient, beispielsweise für Nebelscheinwerfer oder Radareinrichtungen, oder als Verstärkung gegen Blasenbildung, wodurch der Widerstand des äußeren Verkleidungsteils gegen den von einem Benutzer ausgeübten leichten Druck verbessert wird.

3. Verkleidung nach Anspruch 1 oder 2, in der das äußere Verkleidungsteil so durchbrochen wird, dass seine Befestigung am inneren Verkleidungsteil und/oder anderen Teilen der umgebenden Karosserie ermöglicht wird.

4. Vorgang der Montage einer Verkleidung nach einem der Ansprüche 1 bis 3 an einem Kraftfahrzeugchassis, wobei der Vorgang die folgenden Schritte umfasst:
- Positionieren und Befestigen der Beleuchtungsanordnungen (14) am inneren Verkleidungsteil (2),
- Zuführen des inneren Verkleidungsteils (2), das die Beleuchtungsanordnungen trägt, vor das Fahrzeug,
- relatives Positionieren des inneren Verkleidungsteils und der Beleuchtungsanordnungen in Bezug auf die sichtbaren benachbarten Teile (17),
- Befestigen des inneren Verkleidungsteils am Chassis und gegebenenfalls der Halterungen (25) für die Beleuchtungsanordnungen zwischen dem Chassis und den Beleuchtungsanordnungen,
- Zuführen und Befestigen des äußeren Verkleidungsteils (1) am inneren Verkleidungsteil, wobei die Referenzpunkte (3, 5) des äußeren Verkleidungsteils auf die Positionierungspunkte (12, 28) des inneren Verkleidungsteils ausgerichtet werden.

5. Vorgang der Montage einer Verkleidung nach einem der Ansprüche 1 bis 3 an einen Kraftfahrzeugchassis, wobei der Vorgang die folgenden Schritte umfasst:
- Führen des inneren Verkleidungsteil vor das Fahrzeug,
- relatives Positionieren des inneren Verkleidungsteils in Bezug auf die benachbarten sichtbaren Teile,
- Befestigen des inneren Verkleidungsteils am Chassis,
- Positionieren und Befestigen der Beleuchtungsanordnungen am inneren Verkleidungsteil,
- gegebenenfalls Befestigen von Halterungen für die Beleuchtungsanordnungen zwischen dem Chassis und den Beleuchtungsanordnungen,
- Zuführen und Befestigen des äußeren Verkleidungsteils am inneren Verkleidungsteil, wobei die Referenzpunkte des äußeren Verkleidungsteils auf die Positionierungspunkte des inneren Verkleidungsteils ausgerichtet werden.
